# EUROPEAN PATENT APPLICATION

(11) **EP 4 640 551 A1**
(43) Date of publication of application: **29.10.2025**
(21) Application number: 23906958.6
(22) Date of filing: 18.12.2023
(51) Int. Cl.: B63G 8/00, B63G 7/06, G05D 1/243

(54) **SUBMERSIBLE**

(30) Priority: 19.12.2022 US 202263433597 P
(71) Applicant: KAWASAKI JUKOGYO KABUSHIKI KAISHA, Kobe-shi, Hyogo 650-8670 (JP)
(72) Inventor: OKAYA, Noriyuki, Hyogo, 650-8670 (JP); FUKUI, Koichi, Hyogo, 650-8670 (JP); NAKANO, Hiroaki, Hyogo, 650-8670 (JP)
(74) Representative: Dehns
(86) International application number: PCT/JP2023/045233
(87) International publication number: WO 2024/135598

(57) **Abstract**

A submersible vessel according to one aspect of the present disclosure calculates a first direction based on the magnitude of magnetic force in a Y direction and the magnitude of magnetic force in a Z direction which have been measured by a first magnetic sensor, the first direction being a direction in which a sectional center position of a pipeline is located when viewed from the first magnetic sensor. The submersible vessel calculates a second direction based on the magnitude of the magnetic force in the Y direction and the magnitude of the magnetic force in the Z direction which have been measured by a second magnetic sensor, the second direction being a direction in which the sectional center position of the pipeline is located when viewed from the second magnetic sensor. The submersible vessel calculates the sectional center position of the pipeline based on the first direction and the second direction.

## Description

### Technical Field

The present disclosure relates to a submersible vessel.

### Background Art

An accurate position of a pipeline laid on a seabed can be grasped by using, for example, a camera mounted on a submersible vessel. However, when the pipeline is embedded in the seabed, the accurate position of the pipeline cannot be grasped without using a method other than a visual method. PTL 1 described below discloses a submarine cable searching system that detects the presence of a submarine cable by detecting a DC magnetic field generated from a direct current flowing through the submarine cable.

### Citation List

### Patent Literature

PTL 1: Japanese Laid-Open Patent Application Publication No. 2002-177402

### Summary of Invention

### Technical Problem

On the other hand, unlike the submarine cable, it is not easy to make a current flow through the pipeline. Therefore, it is difficult to grasp the accurate position of the pipeline by the application of the method described in PTL 1. An object of the present disclosure is to provide a submersible vessel which can grasp the accurate position of a pipeline by a simple method even when the pipeline is embedded in a seabed.

### Solution to Problem

A submersible vessel according to one aspect of the present disclosure includes: a hull; a propulsion structure that applies thrust to the hull; a first magnetic sensor that is attached to the hull and performs three dimensional measurement of magnetic force; a second magnetic sensor that is attached to the hull so as to be different in position from the first magnetic sensor and performs the three dimensional measurement of the magnetic force; and control circuitry configured to move the hull along a pipeline, which is magnetized, while calculating a sectional center position of the pipeline, wherein: when the hull is propelled in an X direction, a direction intersecting with the X direction is defined as a Y direction, and a direction intersecting with the X direction and the Y direction is defined as a Z direction; the control circuitry calculates a first direction based on the magnitude of the magnetic force in the Y direction and the magnitude of the magnetic force in the Z direction which have been measured by the first magnetic sensor, the first direction being a direction in which the sectional center position of the pipeline is located when viewed from the first magnetic sensor; the control circuitry calculates a second direction based on the magnitude of the magnetic force in the Y direction and the magnitude of the magnetic force in the Z direction which have been measured by the second magnetic sensor, the second direction being a direction in which the sectional center position of the pipeline is located when viewed from the second magnetic sensor; and the control circuitry calculates the sectional center position of the pipeline based on the first direction and the second direction.

### Advantageous Effects of Invention

According to this configuration, even when the pipeline is embedded in the seabed, the accurate position of the pipeline can be grasped by the simple method.

### Brief Description of Drawings

FIG. 1 is a plan view of a submersible vessel.
FIG. 2 is a block diagram of a control system of the submersible vessel.
FIG. 3 is a diagram for explaining the magnetic property of a pipeline.
FIG. 4 is a diagram showing magnetic force on a plane perpendicular to the pipeline.
FIG. 5 is a flowchart of a pipeline sectional center position calculating program.
FIG. 6 is a diagram showing a positional relation between the submersible vessel and the pipeline when the pipeline sectional center position calculating program is executed.
FIG. 7 is a diagram showing a moving state of the submersible vessel when the pipeline sectional center position calculating program is executed.
FIG. 8 is a diagram prepared by plotting the magnitude of the magnetic force in a Y direction and the magnitude of the magnetic force in a Z direction on a coordinate plane.

### Description of Embodiments

### Entire Configuration of Submersible Vessel

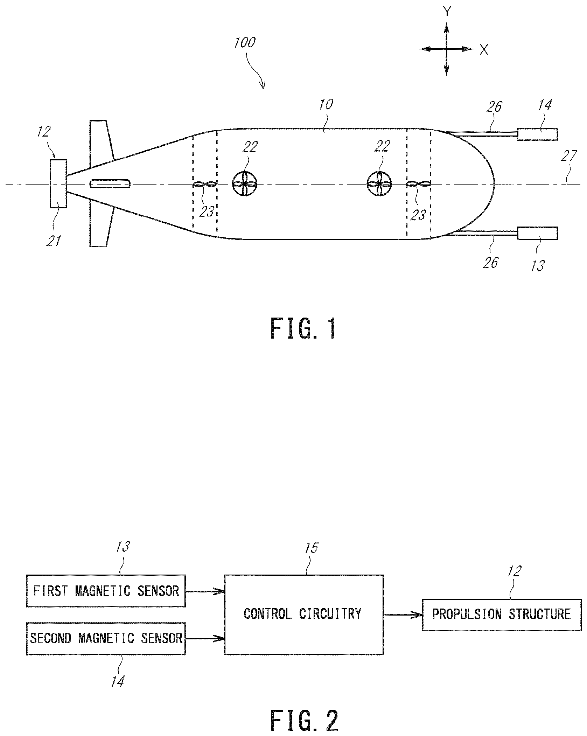

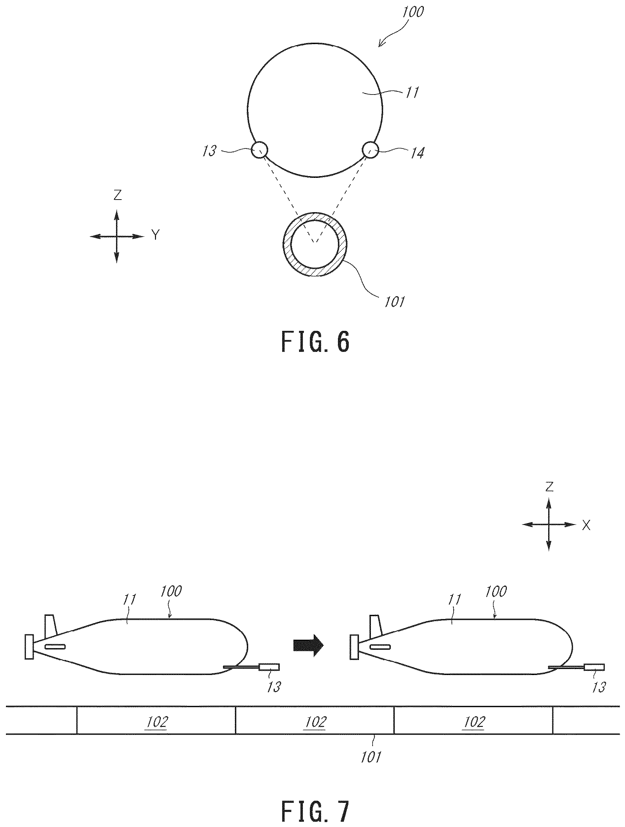

Hereinafter, an embodiment will be described. First, the entire configuration of a submersible vessel 100 will be described. FIG. 1 is a plan view of the submersible vessel 100. Moreover, FIG. 2 is a block diagram of a control system of the submersible vessel 100. The submersible vessel 100 according to the present embodiment moves along a pipeline 101 (see FIG. 6) while calculating a sectional center position (a center position of a section perpendicular to a longitudinal direction of the pipeline 101) of the pipeline 101. In the present embodiment, the submersible vessel 100 collects position data of the pipeline 101 while moving. The submersible vessel 100 may perform, for example, noncontact inspection with respect to the pipeline 101 while moving.

As shown in FIG. 1, the submersible vessel 100 includes a hull 11, a propulsion structure 12, a first magnetic sensor 13, a second magnetic sensor 14, and control circuitry 15 (see FIG. 2). Hereinafter, these components will be described in order.

### Hull

The hull 11 includes various types of equipment. A right side and left side on a paper surface of FIG. 1 respectively correspond to a front side and rear side of the hull 11. An upper side and lower side on the paper surface of FIG. 1 respectively correspond to a left side and right side of the hull 11. A near side and far side on the paper surface of FIG. 1 respectively correspond to an upper side and lower side of the hull 11. The hull 11 is propelled forward.

### Propulsion Structure

The propulsion structure 12 is a system that applies thrust to the hull 11. The propulsion structure 12 can also adjust the attitude and propulsion direction of the hull 11. The propulsion structure 12 of the present embodiment includes: a main propulsion thruster 21 that generates forward thrust; two vertical thrusters 22 that are front and rear vertical thrusters 22 that apply force to the hull 11 in an upper-lower direction; two horizontal thrusters 23 that are front and rear horizontal thrusters 23 that apply force to the hull 11 in a left-right direction; and a rudder that changes the course of the hull 11. The propulsion structure 12 is not limited to the above configuration and may include, for example, a swing thruster that can generate thrust, and in addition, change a direction in which the thrust is generated.

### First Magnetic Sensor

The first magnetic sensor 13 is a sensor that can perform three dimensional measurement of magnetic force. The first magnetic sensor 13 is attached to the hull 11 through an arm 26. The first magnetic sensor 13 is located in front of the hull 11 and at a right side of a center line 27 extending through a left-right direction middle of the hull 11. The first magnetic sensor 13 of the present embodiment can measure the magnitude (magnetic flux density on a plane perpendicular to the X direction) of the magnetic force in the X direction at the position of the first magnetic sensor 13, the magnitude (magnetic flux density on a plane perpendicular to the Y direction) of the magnetic force in the Y direction at the position of the first magnetic sensor 13, and the magnitude (magnetic flux density on a plane perpendicular to the Z direction) of the magnetic force in the Z direction at the position of the first magnetic sensor 13.

In the present embodiment, the "X direction" denotes a front-rear direction of the hull 11, the "Y direction" denotes a left-right direction of the hull 11, and the "Z direction" denotes an upper-lower direction of the hull 11. To be specific, in the present embodiment, the X direction, the Y direction, and the Z direction are orthogonal to each other. The hull 11 is propelled in the X direction.

### Second Magnetic Sensor

The second magnetic sensor 14 is a sensor that can perform three dimensional measurement of the magnetic force. The second magnetic sensor 14 is the same in configuration as the first magnetic sensor 13 although the positions of the first and second magnetic sensors 13 and 14 are different from each other. The second magnetic sensor 14 is attached to the hull 11 through the arm 26. Moreover, the second magnetic sensor 14 is located in front of the hull 11 and at a left side of the center line 27 of the hull 11. To be specific, in a plan view, the second magnetic sensor 14 is located at an opposite side to the first magnetic sensor 13 across the center line 27 of the hull 11. The second magnetic sensor 14 of the present embodiment can measure the magnitude of the magnetic force in the X direction at the position of the second magnetic sensor 14, the magnitude of the magnetic force in the Y direction at the position of the second magnetic sensor 14, and the magnitude of the magnetic force in the Z direction at the position of the second magnetic sensor 14.

### Control Circuitry

The control circuitry 15 is a device that performs various types of calculation processing and controls various types of equipment. The control circuitry 15 includes a processor, a volatile memory, a non-volatile memory, an I/O interface, and the like. The non-volatile memory of the control circuitry 15 stores various programs including a below-described pipeline sectional center position calculating program, and the processor performs calculation processing based on the programs by using the volatile memory.

As shown in FIG. 2, the control circuitry 15 of the present embodiment is electrically connected to the first magnetic sensor 13 and the second magnetic sensor 14 and can acquire the magnitudes of the magnetic forces in the respective directions, which have been measured by the magnetic sensors 13 and 14, based on measurement signals received from the magnetic sensors 13 and 14. Moreover, the control circuitry 15 is electrically connected to the propulsion structure 12 and can adjust the attitude, propulsion direction, and propulsion speed of the hull 11 by transmitting a control signal to the propulsion structure 12.

The functionality of the elements disclosed herein may be implemented using circuitry or processing circuitry which includes general purpose processors, special purpose processors, integrated circuits, ASICs ("Application Specific Integrated Circuits"), conventional circuitry and/or combinations thereof which are configured or programmed to perform the disclosed functionality. Processors are considered processing circuitry or circuitry as they include transistors and other circuitry therein. In the disclosure, the circuitry, units, or means are hardware that carry out or are programmed to perform the recited functionality. The hardware may be any hardware disclosed herein or otherwise known which is programmed or configured to carry out the recited functionality. When the hardware is a processor which may be considered a type of circuitry, the circuitry, means, or units are a combination of hardware and software, the software being used to configure the hardware and/or processor.

### Magnetic Property of Pipeline

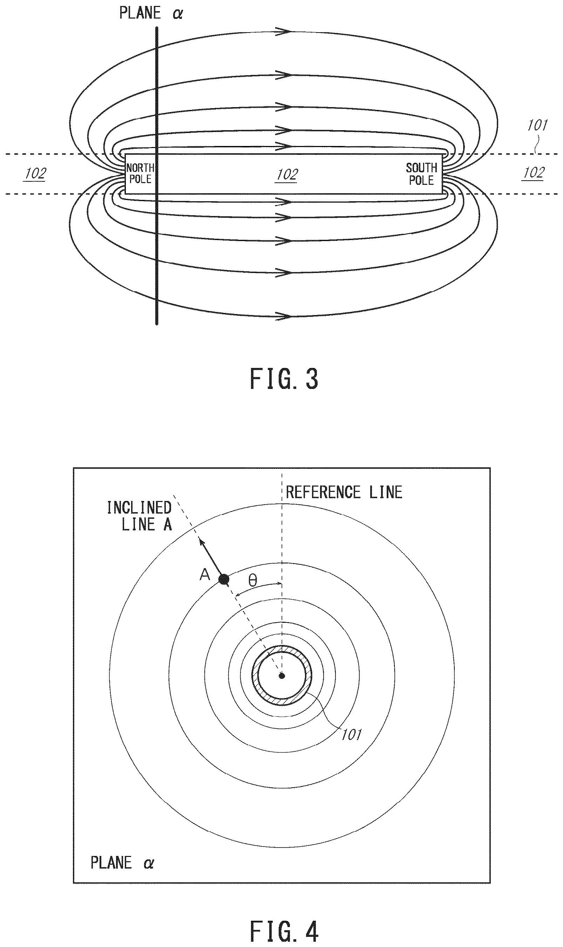

As described above, the submersible vessel 100 according to the present embodiment moves along the pipeline 101 while calculating the sectional center position of the pipeline 101. The following will describe the magnetic property of the pipeline 101. FIG. 3 is a diagram for explaining the magnetic property of the pipeline 101. The pipeline 101 of the present embodiment is formed by connecting individual pipes 102 that are magnetic bodies. A manufacturing process of the individual pipe 102 includes a rolling step, and the individual pipes 102 are magnetized by the rolling step.

Therefore, as shown in FIG. 3, each of the individual pipes 102 can be regarded as a magnet including one end portion as the north pole and the other end portion as the south pole. A magnetic field is generated around the individual pipe 102, and magnetic flux lines extending from the north pole to the south pole can be drawn as shown in FIG. 3. When the north poles of the two adjacent individual pipes 102 are connected to each other, or the south poles of the two adjacent individual pipes 102 are connected to each other, each individual pipe 102 can be regarded as one magnet. On the other hand, when the individual pipes 102 are connected to each other such that the south pole and the north pole are connected to each other, all of these individual pipes 102 can be regarded as one magnet.

The following will describe the direction of the magnetic force on a plane α that is a plane perpendicular to the longitudinal direction of the individual pipe 102 as shown in FIG. 3. FIG. 4 is a diagram showing the direction of the magnetic force at a point A on the plane α. As shown in FIG. 4, when a line extending in the upper-lower direction through a sectional center of the individual pipe 102 is referred to as a "reference line," the point A is located on an "inclined line A" that is inclined relative to the reference line by θ degrees and extends through the sectional center of the individual pipe 102. The direction of the magnetic force at the point A overlaps an extending direction of the inclined line A. Therefore, when the direction of the magnetic force at the point A is found out, i.e., when a ratio between a vertical component and horizontal component of the magnetic force at the point A is found out, a direction in which the sectional center position of the pipeline 101 is located when viewed from the point A is found out. Even when the pipeline 101 is embedded in the seabed, the above magnetic property of the pipeline 101 stays the same.

### Pipeline Sectional Center Position Calculating Program

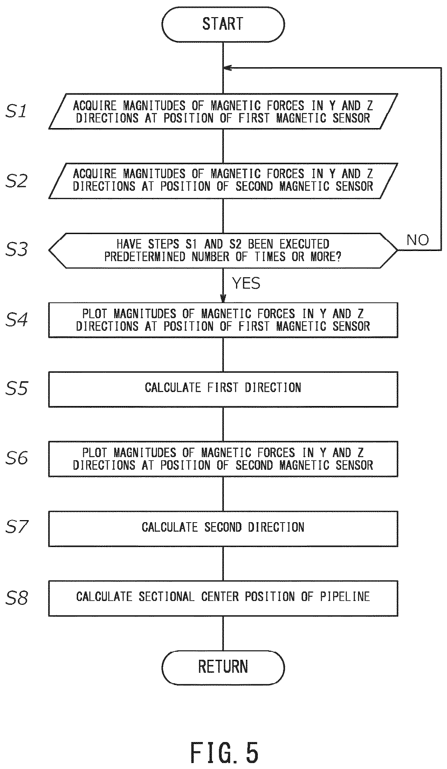

Next, the pipeline sectional center position calculating program (hereinafter referred to as a "calculating program") executed by the control circuitry 15 will be described. FIG. 5 is a flowchart of the calculating program. The calculating program is a program that calculates the sectional center position of the pipeline 101.

FIG. 6 is a diagram in which the submersible vessel 100 and the pipeline 101 are viewed from the front side. FIG. 6 shows a positional relation between the submersible vessel 100 and the pipeline 101 when the calculating program is executed. As shown in FIG. 6, the submersible vessel 100 is located above the pipeline 101 at the start of the calculating program. Moreover, while the control circuitry 15 executes the calculating program, the submersible vessel 100 moves along the pipeline 101 as shown in FIG. 7. At this time, the control circuitry 15 controls the propulsion structure 12 based on the calculated sectional center position of the pipeline 101 such that the positional relation between the submersible vessel 100 and the pipeline 101 is kept constant. Therefore, while the calculating program is executed, the relative positions of the first magnetic sensor 13, the second magnetic sensor 14, and the sectional center of the pipeline 101 on the plane perpendicular to the pipeline 101 are constant.

As shown in FIG. 5, when the calculating program is started, the control circuitry 15 first receives the measurement signal from the first magnetic sensor 13 to acquire the magnitude of the magnetic force in the Y direction at the position of the first magnetic sensor 13 and the magnitude of the magnetic force in the Z direction at the position of the first magnetic sensor 13 (Step S1).

Next, the control circuitry 15 receives the measurement signal from the second magnetic sensor 14 to acquire the magnitude of the magnetic force in the Y direction at the position of the second magnetic sensor 14 and the magnitude of the magnetic force in the Z direction at the position of the second magnetic sensor 14 (Step S2).

Next, the control circuitry 15 determines whether or not Steps S1 and S2 described above have been executed a predetermined number of times or more (Step S3). When the control circuitry 15 determines that Steps S1 and S2 have been executed the predetermined number of times or more (YES in Step S3), the control circuitry 15 proceeds to Step S4. On the other hand, when the control circuitry 15 determines that Steps S1 and S2 have not been executed the predetermined number of times or more (NO in Step S3), the control circuitry 15 returns to Step S1 and repeats Steps S1 and S2.

The "predetermined number of times" in Step S3 is set to twice or more, and for example, is set to 20 times or more. When the predetermined number of times is small, the sectional center position of the pipeline 101 can be calculated in a short period of time. When the predetermined number of times is large, the sectional center position of the pipeline 101 can be calculated with a high degree of accuracy.

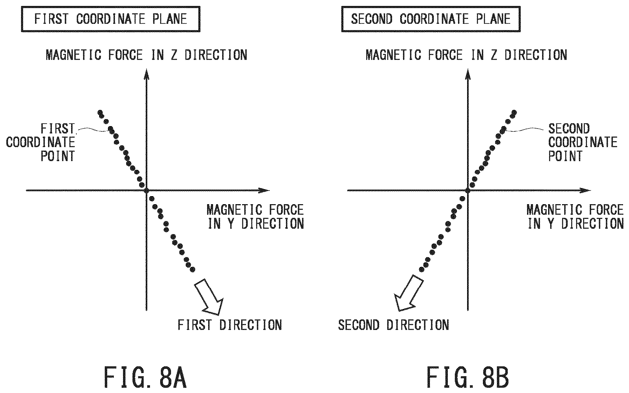

Next, the control circuitry 15 plots on a coordinate plane (hereinafter referred to as a "first coordinate plane") points (hereinafter referred to as "first coordinate points") each of which has coordinates that are the magnitude of the magnetic force in the Y direction at the position of the first magnetic sensor 13 and the magnitude of the magnetic force in the Z direction at the position of the first magnetic sensor 13 which have been acquired in Step S1 (Step S4). FIG. 8A shows the first coordinate points plotted on the first coordinate plane. In FIG. 8A, the first coordinate points corresponding to the most recent predetermined number of times (which are different in the measurement position of the first magnetic sensor 13 from each other) are plotted.

As described above, while the calculating program is executed, the relative positions of the first magnetic sensor 13 and the sectional center of the pipeline 101 on the plane perpendicular to the pipeline 101 are constant. In such a case, as shown in FIG. 8A, the first coordinate points plotted on the first coordinate plane are lined up on a substantially straight line. This is because ratios between the magnitudes of the magnetic forces in the Y direction and the magnitudes of the magnetic forces in the Z direction at the first coordinate points are substantially the same as each other.

Next, the control circuitry 15 calculates a direction (hereinafter referred to as a "first direction") in which the sectional center position of the pipeline 101 is located when viewed from the first magnetic sensor 13 (Step S5). Here, an arrangement direction of the first coordinate points overlaps the direction of the magnetic force at the position of the first magnetic sensor 13. Then, the direction of the magnetic force at the position of the first magnetic sensor 13 is completely opposite to the direction in which the sectional center position of the pipeline 101 is located when viewed from the first magnetic sensor 13 (see FIG. 4). Therefore, in the present embodiment, a direction which overlaps the arrangement direction of the first coordinate points and extends downward is the first direction. For example, an approximate straight line of the first coordinate points may be calculated, and a direction which overlaps an extending direction of the approximate straight line and extends downward may be the first direction.

Next, the control circuitry 15 plots on a coordinate plane (hereinafter referred to as a "second coordinate plane") points (hereinafter referred to as "second coordinate points") each of which has coordinates that are the magnitude of the magnetic force in the Y direction at the position of the second magnetic sensor 14 and the magnitude of the magnetic force in the Z direction at the position of the second magnetic sensor 14 which have been acquired in Step S2 (Step S6). FIG. 8B shows the second coordinate points plotted on the second coordinate plane. In FIG. 8B, the second coordinate points corresponding to the most recent predetermined number of times are plotted.

Next, the control circuitry 15 calculates a direction (hereinafter referred to as a "second direction") in which the sectional center position of the pipeline 101 is located when viewed from the second magnetic sensor 14 (Step S7). In the present embodiment, as with the above calculation of the first direction, a direction which overlaps the arrangement direction of the second coordinate points plotted on the second coordinate plane and extends downward is the second direction.

Finally, the control circuitry 15 calculates the sectional center position of the pipeline 101 based on the first direction calculated in Step S5 and the second direction calculated in Step S7 (Step S8). Specifically, a point located on the first direction and the second direction is the sectional center position of the pipeline 101. After Step S8, the control circuitry 15 returns to Step S1 and repeats Steps S1 to S8.

As above, according to the submersible vessel 100 of the present embodiment, even when the pipeline 101 is embedded in the seabed, the sectional center position of the pipeline 101, i.e., the position of the pipeline 101 can be accurately grasped by the simple method without performing work of, for example, supplying a current to the pipeline 101. The accuracy of the calculation of the sectional center position of the pipeline 101 is improved by using the first coordinate points and the second coordinate points as in the present embodiment.

### Modified Example

In the above embodiment, the first direction is calculated based on the arrangement direction of the first coordinate points plotted on the first coordinate plane (Step S5), and the second direction is calculated based on the arrangement direction of the second coordinate points plotted on the second coordinate plane (Step S7). However, the method of calculating the first direction and the second direction is not limited to the above method.

For example, the first direction may be calculated based on the ratio between the magnitude of the magnetic force in the Y direction at the position of the first magnetic sensor 13 and the magnitude of the magnetic force in the Z direction at the position of the first magnetic sensor 13. Similarly, the second direction may be calculated based on the ratio between the magnitude of the magnetic force in the Y direction at the position of the second magnetic sensor 14 and the magnitude of the magnetic force in the Z direction at the position of the second magnetic sensor 14. According to the above method, without plotting the first coordinate points and the second coordinate points, the first direction and the second direction can be calculated by a small amount of measurement data, and the sectional center position of the pipeline 101 can be calculated in a short period of time.

Moreover, the foregoing has described a case where the X direction, the Y direction, and the Z direction are orthogonal to each other. However, the X direction, the Y direction, and the Z direction do not have to be orthogonal to each other. For example, the Y direction may be inclined relative to the left-right direction of the hull 11, and the Z direction may be inclined relative to the upper-lower direction of the hull 11. Moreover, the Y direction and Z direction at the first magnetic sensor 13 do not have to coincide with the Y direction and Z direction at the second magnetic sensor 14. Even in such a case, the sectional center position of the pipeline 101 can be calculated by, for example, correcting the measurement data of the first magnetic sensor 13 and the measurement data of the second magnetic sensor 14. However, when the X direction, the Y direction, and the Z direction are orthogonal to each other, the sectional center position of the pipeline 101 can be calculated by relatively simple calculation.

Moreover, the foregoing has described a case where the submersible vessel 100 includes the two magnetic sensors 13 and 14. However, the number of magnetic sensors included in the submersible vessel 100 is not limited. For example, the submersible vessel 100 may include a third magnetic sensor and a fourth magnetic sensor in addition to the first magnetic sensor 13 and the second magnetic sensor 14. In this case, the third magnetic sensor and the fourth magnetic sensor may be located behind a front-rear direction middle of the hull 11. According to this configuration, the sectional center position of the pipeline 101 can be calculated by using the measurement data of the third magnetic sensor and the measurement data of the fourth magnetic sensor. Thus, the sectional center positions of the pipeline 101 can be calculated based on the pieces of measurement data of the combination of the first and second magnetic sensors 13 and 14 and the pieces of measurement data of the combination of the third and fourth magnetic sensors. As a result, the position of the pipeline 101 can be grasped more accurately by comparing calculation results from each other. Moreover, since the position of a rear portion of the submersible vessel 100 relative to the pipeline 101 can be grasped, this is useful for the control of the attitude of the submersible vessel 100.

### Conclusion

A first aspect disclosed in the present specification is a submersible vessel including: a hull; a propulsion structure that applies thrust to the hull; a first magnetic sensor that is attached to the hull and performs three dimensional measurement of magnetic force; a second magnetic sensor that is attached to the hull so as to be different in position from the first magnetic sensor and performs the three dimensional measurement of the magnetic force; and control circuitry configured to move the hull along a pipeline, which is magnetized, while calculating a sectional center position of the pipeline, wherein: when the hull is propelled in an X direction, a direction intersecting with the X direction is defined as a Y direction, and a direction intersecting with the X direction and the Y direction is defined as a Z direction; the control circuitry calculates a first direction based on the magnitude of the magnetic force in the Y direction and the magnitude of the magnetic force in the Z direction which have been measured by the first magnetic sensor, the first direction being a direction in which the sectional center position of the pipeline is located when viewed from the first magnetic sensor; the control circuitry calculates a second direction based on the magnitude of the magnetic force in the Y direction and the magnitude of the magnetic force in the Z direction which have been measured by the second magnetic sensor, the second direction being a direction in which the sectional center position of the pipeline is located when viewed from the second magnetic sensor; and the control circuitry calculates the sectional center position of the pipeline based on the first direction and the second direction.

According to this configuration, even when the pipeline is embedded in the seabed, the accurate position of the pipeline can be grasped by the simple method.

A second aspect disclosed in the present specification is the submersible vessel according to the first aspect, wherein: the control circuitry plots on a first coordinate plane, points each of which has coordinates that are the magnitude of the magnetic force in the Y direction and the magnitude of the magnetic force in the Z direction which have been measured by the first magnetic sensor while the hull moves; the control circuitry calculates the first direction based on an arrangement direction of the points plotted on the first coordinate plane; the control circuitry plots on a second coordinate plane, points each of which has coordinates that are the magnitude of the magnetic force in the Y direction and the magnitude of the magnetic force in the Z direction which have been measured by the second magnetic sensor while the hull moves; and the control circuitry calculates the second direction based on an arrangement direction of the points plotted on the second coordinate plane.

According to this configuration, the position of the pipeline can be grasped more accurately.

A third aspect disclosed in the present specification is the submersible vessel according to the first aspect, wherein: the control circuitry calculates the first direction based on a ratio between the magnitude of the magnetic force in the Y direction and the magnitude of the magnetic force in the Z direction which have been measured by the first magnetic sensor; and the control circuitry calculates the second direction based on a ratio between the magnitude of the magnetic force in the Y direction and the magnitude of the magnetic force in the Z direction which have been measured by the second magnetic sensor.

According to this configuration, the accurate position of the pipeline can be grasped more quickly.

A fourth aspect disclosed in the present specification is the submersible vessel according to any one of the first to third aspects, wherein the X direction, the Y direction, and the Z direction are orthogonal to each other.

According to this configuration, the sectional center position of the pipeline can be calculated by relatively simple calculation.

A fifth aspect disclosed in the present specification is the submersible vessel according to any one of the first to fourth aspects, wherein the first magnetic sensor and the second magnetic sensor are located in front of the hull.

According to this configuration, since the sectional center position of the pipeline which is located in front of the hull can be calculated, the control of moving the hull above the pipeline is easily executed.

A sixth aspect disclosed in the present specification is the submersible vessel according to any one of the first to fifth aspects, wherein in a plan view, the first magnetic sensor and the second magnetic sensor are respectively located at both sides across a center line extending through a left-right direction middle of the hull.

According to this configuration, since an angle between the first direction and the second direction can be increased, the position of the pipeline can be grasped more accurately.

### Reference Signs List

- 11: hull
- 12: propulsion structure
- 13: first magnetic sensor
- 14: second magnetic sensor
- 15: control circuitry
- 27: center line
- 100: submersible vessel
- 101: pipeline

## Claims

1. A submersible vessel comprising:
a hull;
a propulsion structure that applies thrust to the hull;
a first magnetic sensor that is attached to the hull and performs three dimensional measurement of magnetic force;
a second magnetic sensor that is attached to the hull so as to be different in position from the first magnetic sensor and performs the three dimensional measurement of the magnetic force; and
control circuitry configured to move the hull along a pipeline, which is magnetized, while calculating a sectional center position of the pipeline, wherein:
when the hull is propelled in an X direction, a direction intersecting with the X direction is defined as a Y direction, and a direction intersecting with the X direction and the Y direction is defined as a Z direction;
the control circuitry calculates a first direction based on the magnitude of the magnetic force in the Y direction and the magnitude of the magnetic force in the Z direction which have been measured by the first magnetic sensor, the first direction being a direction in which the sectional center position of the pipeline is located when viewed from the first magnetic sensor;
the control circuitry calculates a second direction based on the magnitude of the magnetic force in the Y direction and the magnitude of the magnetic force in the Z direction which have been measured by the second magnetic sensor, the second direction being a direction in which the sectional center position of the pipeline is located when viewed from the second magnetic sensor; and
the control circuitry calculates the sectional center position of the pipeline based on the first direction and the second direction.

2. The submersible vessel according to claim 1, wherein:
the control circuitry plots on a first coordinate plane, points each of which has coordinates that are the magnitude of the magnetic force in the Y direction and the magnitude of the magnetic force in the Z direction which have been measured by the first magnetic sensor while the hull moves;
the control circuitry calculates the first direction based on an arrangement direction of the points plotted on the first coordinate plane;
the control circuitry plots on a second coordinate plane, points each of which has coordinates that are the magnitude of the magnetic force in the Y direction and the magnitude of the magnetic force in the Z direction which have been measured by the second magnetic sensor while the hull moves; and
the control circuitry calculates the second direction based on an arrangement direction of the points plotted on the second coordinate plane.

3. The submersible vessel according to claim 1, wherein:
the control circuitry calculates the first direction based on a ratio between the magnitude of the magnetic force in the Y direction and the magnitude of the magnetic force in the Z direction which have been measured by the first magnetic sensor; and
the control circuitry calculates the second direction based on a ratio between the magnitude of the magnetic force in the Y direction and the magnitude of the magnetic force in the Z direction which have been measured by the second magnetic sensor.

4. The submersible vessel according to claim 1, wherein the X direction, the Y direction, and the Z direction are orthogonal to each other.

5. The submersible vessel according to claim 1, wherein the first magnetic sensor and the second magnetic sensor are located in front of the hull.

6. The submersible vessel according to claim 1, wherein in a plan view, the first magnetic sensor and the second magnetic sensor are respectively located at both sides across a center line extending through a left-right direction middle of the hull.
